# FASCICULE DE BREVET EUROPEEN

(11) **EP 2 249 543 B1**
(45) Date de publication et mention de la délivrance du brevet: **12.03.2014**
(21) Numéro de dépôt: 10159724.3
(22) Date de dépôt: 13.04.2010
(51) Int. Cl.: H04L 29/06, G06T 1/00, H04L 9/32

(54) **Procédé pour autoriser une connexion entre un terminal informatique et un serveur source**
Verfahren zum Autorisieren einer Verbindung zwischen einem IT-Endgerät und einem Ursprungsserver
Method for authorising a connection between a computer terminal and a source server

(30) Priorité: 16.04.2009 FR 0901850
(43) Date de publication de la demande: 10.11.2010
(73) Titulaire: Synchronoss Technologies France, 13002 Marseille (FR)
(72) Inventeur: Colon, François, 13013, Marseille (FR)
(74) Mandataire: Novagraaf Technologies

(56) Documents cités:
- JP-A- 2005 293 156
- US-B1- 6 947 404

## Description

La présente invention a pour objet un procédé et un système permettant d'autoriser une connexion entre un terminal informatique et un serveur source.

### DOMAINE TECHNIQUE DE L'INVENTION

L'invention concerne le domaine technique général des protocoles permettant de protéger l'authentification d'un terminal informatique auprès d'un serveur source.

L'invention s'applique de façon préférée, mais non limitative, à l'authentification d'un utilisateur pour : l'ouverture d'une session de messagerie instantanée sur téléphone mobile, l'activation de fonctionnalités sur un terminal mobile ou fixe, la transmission de données sur un réseau de communication sécurisée (faisant intervenir en particulier des cartes à puces), etc.

### ÉTAT DE LA TECHNIQUE ANTÉRIEURE

Les terminaux informatiques (tels que téléphones mobiles, ordinateurs PC portables ou fixes, PDA, BlackBerry®, ...) sont généralement équipés d'un certain nombre de fonctionnalités permettant, par exemple, de consulter des mails, d'ouvrir une session de messagerie instantanée, de communiquer sur un Blog, de transférer des données sécurisées, etc. Chacune de ces fonctionnalités est mise en oeuvre par une application informatique spécifique (ou logiciel) intégrée dans le terminal informatique.

Lorsqu'un utilisateur souhaite par exemple se connecter à un service de messagerie instantanée, l'application informatique de son terminal émet une requête demandant au serveur d'établir une connexion.

On connaît une technique d'authentification triviale dans laquelle, pour autoriser une connexion et activer une fonctionnalité, le terminal informatique doit d'abord transmettre un mot de passe directement au serveur source ou à un serveur passerelle (plus connu par l'homme du métier sous le terme anglais « Gateway ») disposé entre ledit terminal et ledit serveur disant.

Par « mot de passe », on entend au sens de la présente invention, un code secret éventuellement associé à l'identifiant de l'utilisateur.

Dans le cas où le mot de passe est transmis préalablement au serveur passerelle, ce dernier analyse ledit mot de passe et, en cas d'authentification, autorise la connexion. Une fois que la connexion est établie entre le terminal informatique et le serveur passerelle, ce dernier se connecte au serveur source de manière à ce que les informations à destination ou émises par ledit terminal transitent par ledit serveur passerelle.

Dans le cas où le mot de passe est transmis directement au serveur source, ce dernier vérifie le mot de passe reçu et autorise la connexion avec le terminal si ledit mot de passe est authentifié.

A ce jour, les mots de passe sont généralement enregistrés dans les terminaux informatiques et dans les serveurs distants ou dans les serveurs passerelles.

L'inconvénient majeur lié à cet état des choses et qu'un fraudeur peut facilement s'introduire dans un terminal informatique et voler le mot de passe d'un utilisateur afin de se faire passer illégalement pour lui. Si les serveurs distants peuvent généralement être difficilement piratés, il n'en ait pas de même des serveurs passerelles. Ces derniers sont en effet sensiblement moins bien protégés que les serveurs distants et en cas d'attaque, un fraudeur peut dérober l'ensemble des mots de passe des utilisateurs afin de se faire passer illégalement pour l'un d'entre eux.

Le document JP 2005/293156, 20 Octobre 2005 (2005-10-20) décrit un procédé d'authentification entre un terminal et un serveur distant. Ce procédé comprend une étape d'échange d'identifiant et de mot de passe entre le terminal et le serveur distant.

Le problème technique principal que vise à résoudre l'invention est d'améliorer la sécurité des procédures d'autorisation de connexion entre un terminal informatique et un serveur source.

### EXPOSÉ DE L'INVENTION

L'invention vise à remédier aux problèmes liés aux difficultés techniques rencontrées dans les mécanismes d'authentification et d'identification entre un terminal informatique et un serveur source.

Plus précisément, l'invention a pour objet un procédé pour autoriser une connexion entre un terminal informatique et un serveur source, ledit procédé étant du type connu de l'art antérieur, c'est-à-dire dans lequel :
- le terminal transmet un mot de passe au serveur source,
- le serveur source vérifie le mot de passe pour autoriser la connexion avec le terminal.

Dans un premier cas où le mot de passe est préalablement transmis à un serveur passerelle disposé entre le terminal informatique et le serveur source, le procédé objet de l'invention est remarquable par le fait que dans une phase d'initialisation :
- le terminal se connecte à un serveur passerelle disposé entre ledit terminal et le serveur source,
- le serveur passerelle transmet au terminal une clé secrète,
- le terminal cache le mot de passe dans un fichier de données en appliquant un algorithme de cryptage amorcé par la clé secrète, puis élimine ladite clé secrète et ledit mot de passe afin de ne conserver que ledit fichier contenant ledit mot de passe,
   et par le fait que dans une phase de connexion :
   - le terminal transmet le fichier de données contenant le mot de passe au serveur passerelle,
   - le serveur passerelle extrait le mot de passe du fichier en exécutant un algorithme de cryptage inverse amorcé par la clé secrète, et transmet au serveur source ledit mot de passe sans le sauvegarder,
   - le serveur source analyse le mot de passe reçu et autorise la connexion avec le terminal si ledit mot de passe est authentifié.

Dans un second cas où le mot de passe est transmis directement au serveur source, le procédé objet de l'invention est remarquable par le fait que dans une phase d'initialisation :
- le terminal se connecte au serveur source,
- le serveur source transmet au terminal une clé secrète,
- le terminal cache le mot de passe dans un fichier de données en appliquant un algorithme de cryptage amorcé par la clé secrète, puis élimine ladite clé secrète et ledit mot de passe afin de ne conserver que ledit fichier contenant ledit mot de passe,
   et par le fait que dans une phase de connexion :
- le terminal transmet le fichier de données contenant le mot de passe au serveur source,
- le serveur source extrait le mot de passe du fichier en exécutant un algorithme de cryptage inverse amorcé par la clé secrète, analyse ledit mot de passe et autorise la connexion avec le terminal si ledit mot de passe est authentifié.

Dans le premier comme dans le second cas, le mot de passe n'est plus stocké tel quel dans le terminal informatique, mais est maintenant caché dans un fichier. Une fois la clé secrète et le mot de passe effacés, le terminal possède seulement un mot de passe crypté. L'objectif est donc atteint : le mot de passe n'est plus écrit tel quel dans le terminal. Si un fraudeur s'introduit dans le terminal informatique, il lui sera maintenant très difficile de connaître le fichier dans lequel est caché le mot de passe et même s'il découvre ce fichier, il lui sera quasi impossible de retrouver ledit mot de passe puisqu'il ne connaîtra pas la clé secrète.

En ce qui concerne le premier cas, le serveur passerelle ne sauvegarde plus les mots de passe des utilisateurs et ne garde en mémoire que la clé secrète.

Si un fraudeur s'introduit dans le serveur passerelle, il n'aura donc plus la possibilité de dérober les mots de passe.

En ce qui concerne le second cas, si un fraudeur intercepte le fichier contenant le mot de passe avant qu'il n'atteigne le serveur source, il n'aura pas la possibilité de retrouver ledit mot de passe puisqu'il ne connaîtra pas la clé secrète.

Concernant le premier cas, pour sécuriser l'envoi de la clé secrète au cours de la phase d'initialisation :
- le serveur passerelle transmet préalablement au terminal une clé secrète secondaire,
- le serveur passerelle crypte la clé secrète en utilisant un algorithme de cryptage amorcé par la clé secondaire, puis transmet ladite clé secrète cryptée au terminal,
- le terminal extrait la clé secrète en exécutant un algorithme de cryptage inverse amorcé par la clé secondaire.

Concernant le second cas et pour sécuriser l'envoi de la clé secrète au cours de la phase d'initialisation :
- le serveur source transmet préalablement au terminal une clé secrète secondaire,
- le serveur source crypte la clé secrète en utilisant un algorithme de cryptage amorcé par la clé secondaire, puis transmet ladite clé secrète cryptée au terminal,
- le terminal extrait la clé secrète en exécutant un algorithme de cryptage inverse amorcé par la clé secondaire.

Pour optimiser la sécurité du procédé selon le premier ou le second cas, le mot de passe est caché dans un fichier média intégré dans le terminal en appliquant un algorithme de stéganographie.

L'invention concerne également des systèmes permettant de mettre en oeuvre le procédé objet de l'invention, selon le premier ou le second cas.

Préférentiellement, le terminal informatique est un téléphone mobile et le serveur source est un serveur de communauté de messagerie instantanée.

### BRÈVE DESCRIPTION DES FIGURES

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 illustre différentes étapes de la phase d'initialisation du procédé conforme à l'invention, dans le premier cas où le mot de passe est préalablement transmis à un serveur passerelle disposé entre le terminal informatique et le serveur source,
- la figure 2 illustre différentes étapes de la phase d'initialisation, selon une variante de réalisation, dans le premier cas,
- la figure 3 illustre différentes étapes de la phase de connexion dans le premier cas,
- la figure 4 illustre différentes étapes de la phase d'initialisation du procédé conforme à l'invention, dans le second cas où le mot de passe est transmis directement au serveur source,
- la figure 5 illustre différentes étapes de la phase d'initialisation, selon une variante de réalisation, dans le second cas,
- la figure 6 illustre différentes étapes de la phase de connexion dans le second cas,
- la figure 7 illustre l'insertion d'un mot de passe dans une image par stéganographie.

Pour plus de clarté, les éléments identiques ou similaires sont repérés par des signes de référence identiques sur l'ensemble des figures.

### DESCRIPTION DETAILLEE D'UN MODE DE RÉALISATION

Le procédé objet de l'invention permet de protéger l'authentification d'un terminal informatique auprès d'un serveur source en vue d'établir une connexion entre ledit terminal et ledit serveur source.

Ce procédé est utilisé de façon préférée, mais non limitative, à l'authentification d'un utilisateur pour : l'ouverture d'une session de messagerie instantanée sur téléphone mobile, l'activation de fonctionnalités sur un terminal mobile ou fixe, la transmission de données sur un réseau de communication sécurisée (faisant intervenir en particulier des cartes à puces), etc.

Le terminal informatique T utilisé pour la mise en oeuvre de l'invention peut être un terminal mobile tel qu'un téléphone mobiles, un appareil du type assistant digital personnel (PDA), un appareil du type BlackBerry®, ou un terminal fixe tel qu'un ordinateur PC. D'une manière bien connue de l'homme du métier, le terminal T est équipé d'un processeur, configuré pour exécuter un ou plusieurs programmes, sous-programmes, microprogrammes ou tous autres types de software équivalents, afin de gérer les différentes étapes du protocole d'authentification qui vont être décrites en détail dans la suite de la description.

Le terminal T intègre également un certain nombre d'applications informatiques (programmes, sous-programmes, microprogrammes, ...) lui permettant de mettre en oeuvre les différentes fonctionnalités qu'il intègre : mails, blog, messagerie instantanée, transfert sécurisé de données, etc.

Pour mettre en oeuvre ces fonctionnalités, il est nécessaire que l'utilisateur du terminal informatique T s'identifie auprès du serveur source.

Le serveur source SS consiste en un ordinateur ou un programme informatique configuré pour proposer certaines fonctionnalités (mails, blog, ...) et en particulier des services de messagerie instantanée, à un terminal T qui s'y connecte. Le serveur source SS est préférentiellement associé à différentes communautés de messagerie instantanée. Il est connecté à un réseau de communication (MSM®, Jabber®, Yahoo !®, ou autre) habituellement employé pour mettre en oeuvre les différentes fonctionnalités citées précédemment.

D'une manière bien connue, ce serveur source SS intègre des applications informatique et et équipé d'un processeur configuré pour exécuter un ou plusieurs programmes, sous-programmes, microprogrammes ou tous autres types de software équivalents, afin de gérer les différentes étapes du protocole d'authentification qui vont être décrites en détail dans la suite de la description.

En se rapportant aux figures annexées, le terminal informatique T doit transmettre un mot de passe PWD au serveur source SS. Ce dernier vérifie alors le mot de passe PWD pour autoriser la connexion avec le terminal T.

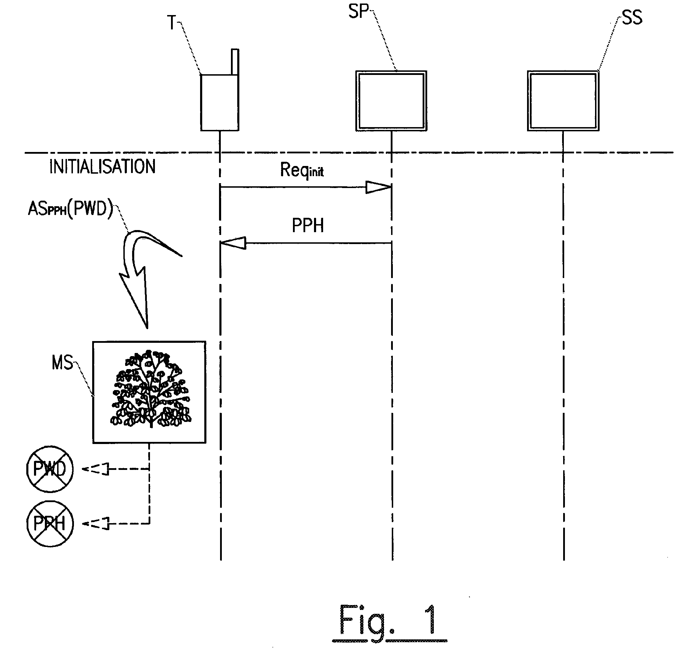

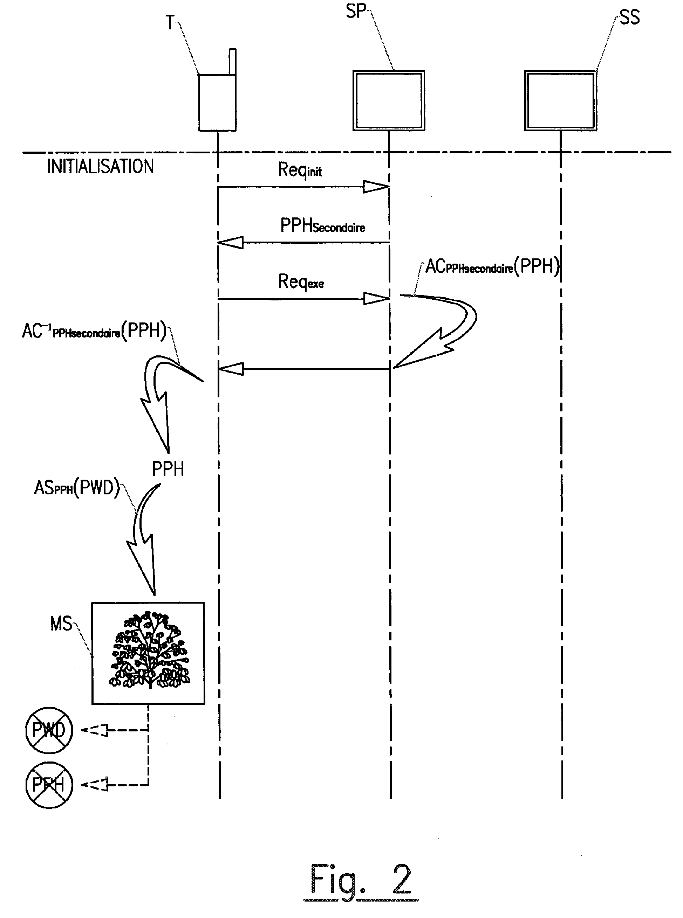

Deux cas peuvent se présenter :
- soit le mot de passe PWD est transmis à un serveur passerelle SP ou « gateway » avant d'être transmis au serveur source SS (figure 1),
- soit le mot de passe est transmis directement au serveur source SS (figure 2).

1er cas : le mot de passe PWD est transmis à un serveur passerelle SP avant d'être transmis au serveur source SS.

En se rapportant aux figures 1 à 3, un serveur passerelle SP indépendant ou non du serveur source SS est disposé entre ledit serveur source et le terminal informatique T de manière à ce que les informations à destination ou émises par ledit terminal transitent par ledit serveur passerelle.

En pratique, ce serveur passerelle SP, plus connu par l'homme du métier par le terme anglais « gateway » est un ordinateur ou un programme informatique configuré pour proposer certains services aux terminaux informatiques des utilisateurs qui s'y connectent. Le serveur passerelle SP peut notamment être équipé de moyens permettant de gérer une session de messagerie instantanée, de filtrer des messages et de gérer les listes de contacts d'un utilisateur.

D'autres services tels que : prévision météo, publicités, jeux, messagerie audio, ou autres peuvent également être mis en oeuvre par le serveur passerelle SP.

Ce dernier permet de déporter et/ou d'ajouter certaines fonctionnalités sans avoir à modifier le serveur source SS. D'une manière bien connue, le serveur passerelle SP intègre des applications informatique et est équipé d'un processeur configuré pour exécuter un ou plusieurs programmes, sous-programmes, microprogrammes ou tous autres types de software équivalents, afin de gérer les différentes étapes du protocole d'authentification qui vont être décrites en détail dans la suite de la description.

En se rapportant à la figure 1, dans une phase d'initialisation, le terminal T se connecte au serveur passerelle SP en transmet audit serveur une requête d'initialisation Reqᵢₙᵢₜ afin de télécharger les ressources d'une application informatique associée à une ou plusieurs fonctionnalités que l'utilisateur souhaite obtenir. En réponse à cette requête, le serveur passerelle SP peut transmettre au terminal T, outre les ressources de l'application, une clé secrète PPH.

Cette dernière est propre à chaque l'utilisateur : il y a autant de clés secrètes PPH que d'utilisateurs. En pratique, le terminal T transmet un identifiant au serveur passerelle SP qui en retour transmet la clé secrète PPH.

Cet identifiant peut par exemple être un identifiant spécifique à chaque utilisateur ou un code de connexion à une communauté de messagerie instantanée. La requête d'initialisation Reqᵢₙᵢₜ et la clé secrète PPH transitent sur le canal de transmission (ou un autre canal) reliant le terminal T au serveur passerelle SP.

La clé secrète PPH intègre en principe un nombre aléatoire n. Ce nombre n est en pratique un nombre entier hexadécimal de plusieurs bits généré par un générateur de nombres pseudo-aléatoire (PNRG) intégré dans le serveur. La clé secrète PPH peut également intégrer un marqueur de temps t. Il est par exemple possible d'implémenter le marqueur t comme un nombre hexadécimal incrémenté à chaque réception d'une requête d'initialisation Reqᵢₙᵢₜ (donc évoluant dans le temps). Toutefois, d'autres techniques sont connues de l'homme du métier pour implémenter le marqueur t. En pratique, le marqueur de temps t correspond à la date de création du nombre aléatoire n. Le nombre n et le marqueur t servent à augmenter l'entropie (difficulté de falsification) de la clé secrète PPH.

Dans une variante de réalisation dont les étapes sont illustrées sur la figure 2, on utilise une clé secrète secondaire PPH_{Secondaire} supplémentaire au cours de la phase d'initialisation. Après que le terminal T se soit connecté au serveur passerelle SP, ledit serveur génère non seulement la clé secrète PPH définie précédemment, mais également une clé secondaire.

Cette dernière est propre à chaque l'utilisateur et est en pratique associée à chaque identifiant des utilisateurs. La clé secrète secondaire PPH_{Secondaire} consiste en principe à un nombre entier hexadécimal de plusieurs bits. La clé secrète PPH ainsi que la clé secrète secondaire PPH_{Secondaire} sont alors stockées dans une base de données du serveur passerelle SP. Le serveur passerelle SP transmet ensuite au terminal T la clé secrète secondaire PPH_{Secondaire}.

Cette dernière peut par exemple être rajoutée, à la volée, dans les ressources de l'application informatique téléchargée par l'utilisateur, dans une zone précise que connaît ladite application. La clé secondaire PPH_{Secondaire} pourra être astucieusement cachée dans le code compilé de l'application informatique. Lors de la première exécution, le terminal T transmet au serveur passerelle SP une requête Reqₑₓₑ demandant audit serveur la clé secrète PPH. En réponse, le serveur passerelle SP crypte la clé secrète PPH en utilisant un algorithme de cryptage AC_{PPHsecondaire} amorcé par la clé secondaire PPH_{Secondaire} puis transmet ladite clé secrète PPH cryptée au terminal T. On peut par exemple employer un algorithme de cryptage du type RSA ou DES, le but étant d'obtenir une chaîne de caractères binaires dans laquelle est dissimulée la clé secrète PPH. Le terminal T peut alors extraire la clé secrète PPH en exécutant un algorithme de cryptage inverse AC⁻¹_{PPHsecondaire} amorcé par la clé secondaire PPH_{Secondaire}.

L'échange de la clé secrète PPH est ainsi mieux sécurisé.

Conformément aux figures 1 et 2, dès que le terminal T dispose de la clé secrète PPH, il cache le mot de passe PWD dans un fichier de données MS en appliquant un algorithme de cryptage AS_{PPH} avantageusement amorcé par la clé secrète PPH. Pour renforcer la sécurité du protocole, dès que l'algorithme de cryptage AS_{PPH} est effectué, le terminal T élimine la clé secrète PPH.

L'algorithme de cryptage AS_{PPH} est propre à chaque clé secrète PPH et donc à chaque utilisateur.

Selon une mode préférée de réalisation, le mot de passe PWD est caché par stéganographie dans un fichier média MS enregistré sur le terminal informatique T. La stéganographie est une technique qui permet de dissimuler une information (le mot de passe PWD) dans un support (le fichier média MS) de sorte que la présence de l'information sur le support soit imperceptible (ni visuellement, ni de manière audible) et donc indécelable, par une personne.

Toutefois, d'autres algorithmes de cryptages connus de l'homme du métier peuvent être utilisés dans le but de dissimuler le mot de passe PWD dans un quelconque fichier de données MS embarqué sur le terminal informatique T.

On pourrait par exemple employer des algorithmes de cryptage RSA et DES, le but étant d'obtenir une chaîne de caractères binaires (fichier) dans laquelle est dissimulée le mot de passe PWD.

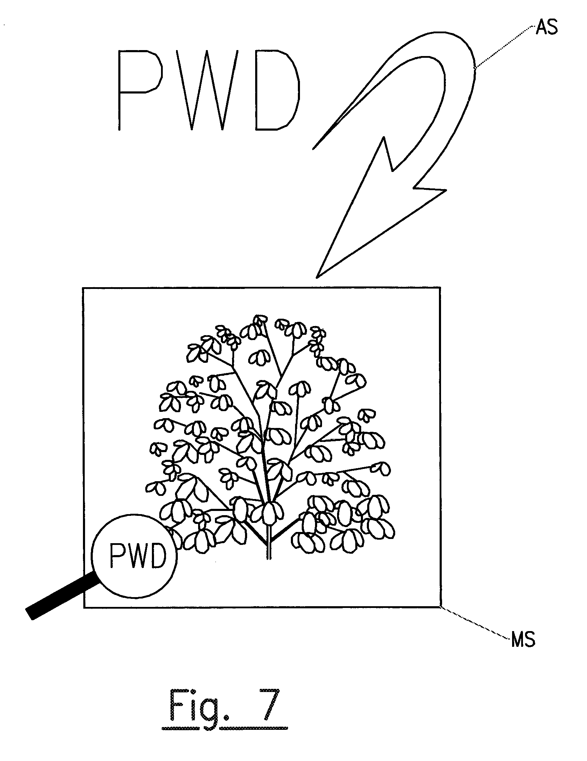

Dans la présente invention, le mot de passe PWD correspond à un code secret associé à l'identifiant de l'utilisateur qui peut se présenter sous la forme d'un nombre hexadécimal de plusieurs bits. Le fichier média MS est de manière générale un fichier binaire faisant partie des ressources de l'application informatique associée à une fonctionnalité embarquée sur le terminal informatique T. Il s'agit en pratique d'un fichier image (JPEG, MPEG, ...), d'un fichier audio (MP3, ...) ou d'un fichier vidéo (MPEG2, MPEG 4, ...). Il peut par exemple s'agir d'une image de fond d'écran, d'un message d'accueil audio ou vidéo. Le cas où le mot de passe PWD est dissimulé dans une image JPEG ou MPEG est illustré sur la figure 7 : si l'image représente un arbre avec des feuilles, le mot de passe PWD pourra être caché dans des pixels correspondants à une des feuilles de l'arbre ou ailleurs, car on ne contrôle pas forcément l'endroit où sera caché ledit mot de passe.

L'algorithme de stéganographie AS préférentiellement utilisé est du type utilisant la technique LSB (pour « Least Significant Bit » en anglais). Cet algorithme consiste à remplacer les bits de poids faible des octets codant l'intensité lumineuse des pixels de l'image par les bits de la clé secrète. En modifiant un bit de poids faible, il est possible de modifier légèrement l'intensité lumineuse ou la teinte d'un pixel de l'image. Cette modification légère est imperceptible pour l'oeil humain et indécelable lorsqu'on analyse l'ensemble des octets codant l'intensité lumineuse des pixels de l'image. Par exemple, si l'intensité lumineuse des pixels de l'image est codée par les octets : 001-000-100-110-101 et que le mot de passe PWD correspond au nombre : 11111, alors l'image modifiée sera codée par les octets suivants : 001-001-101-111-101. Le même algorithme de stéganographie peut être utilisé pour la dissimulation du mot de passe PWD dans un fichier vidéo. Dans un fichier audio, on peut cacher de l'information dans des variations imperceptibles du son codées par des bits 30 faiblement significatifs. Bien évidemment, tout autre algorithme de stéganographie convenant à l'homme du métier peut être utilisé.

Une fois que le mot de passe PWD est caché dans le fichier MS, le terminal T élimine ledit mot de passe afin de ne conserver que ledit fichier. Ce dernier peut ensuite être stocké dans une zone-mémoire du terminal T. Même si le fichier MS est décelé par un fraudeur qui s'est introduit illégalement dans le terminal T, il n'aura pratiquement aucune chance de déceler le mot de passe PWD.

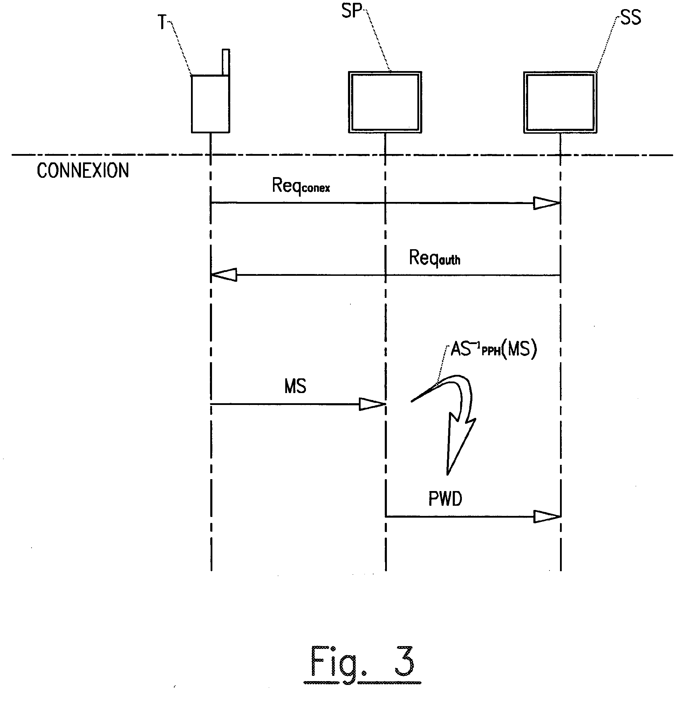

En se rapportant à la figure 3, lorsque l'utilisateur du terminal T souhaite ouvrir une session, une application informatique placée dans ledit terminal émet une requête de connexion Req_{conex} à destination du serveur passerelle SP qui la transmet directement au serveur source SS : c'est la phase de connexion.

Avant d'activer la ou les fonctionnalités, le serveur source SS doit authentifier le terminal T. Pour ce faire, il envoie au terminal T, via le serveur passerelle SP, une requête d'authentification Reqₐᵤₜₕ. Les requêtes Req_{conex} et Reqₐᵤₜₕ transitent sur les canaux de transmission (ou d'autres canaux) reliant le terminal T, le serveur passerelle SP et le serveur source SS.

Lorsque le terminal T reçoit requête d'authentification Reqₐᵤₜₕ, il transmet au serveur passerelle SP le fichier de données MS dans lequel est caché le mot de passe PWD. Ce dernier ne transite donc pas tel quel entre le terminal T et le serveur passerelle SP et même si le fichier MS est intercepté par un fraudeur, ce dernier n'aura pratiquement aucune chance de déceler le mot de passe PWD.

Après avoir reçu le fichier MS, le serveur passerelle SP extrait le mot de passe PWD en exécutant un algorithme de cryptage inverse AS⁻¹_{PPH}. En pratique, cet algorithme de cryptage inverse est amorcé par la clé secrète PPH associée à l'utilisateur du terminal T. Le serveur passerelle SP transmet alors au serveur source SS le mot de passe PWD extrait du fichier MS. Le mot de passe PWD n'est pas sauvegardé sur le serveur passerelle SP mais est au contraire instantanément éliminé dès son envoi vers le serveur source SS.

Même si un fraudeur s'introduit illégalement dans le serveur passerelle SP, il n'aura aucune chance de déceler le mot de passe PWD.

Le serveur source SS analyse le mot de passe PWD reçu et si ledit mot de passe est authentifié, autorise la connexion avec le terminal T pour activer la ou les fonctionnalités souhaitées par l'utilisateur. Dans le cas contraire, un message d'erreur peut être envoyé du serveur source SS vers le terminal T.

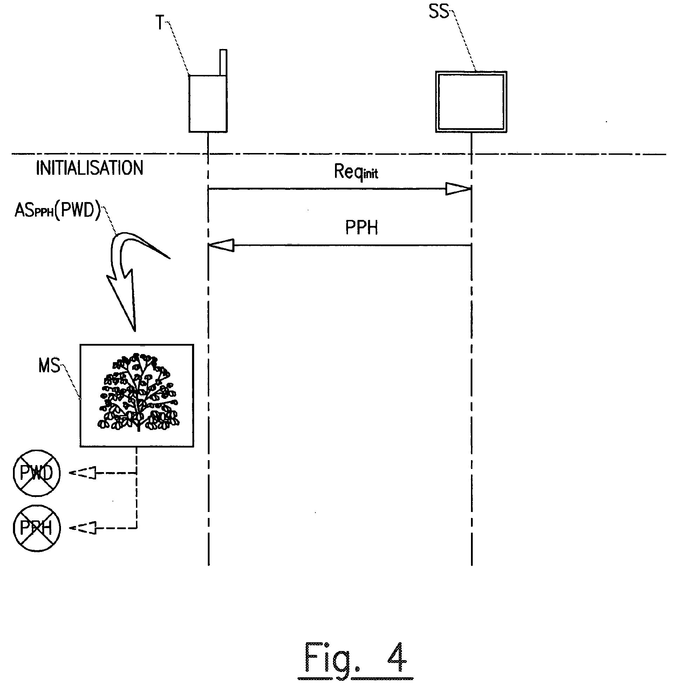

2nd cas : le mot de passe PWD est transmis directement au serveur source SS.
En se rapportant aux figures 4 à 6, le terminal informatique T est dans ce cas directement relié au serveur source SS. En se rapportant à la figure 4, dans une phase d'initialisation, le terminal T se connecte au serveur passerelle SP en transmettant au serveur source SS une requête d'initialisation Reqᵢₙᵢₜ afin de télécharger les ressources d'une application informatique associée à une ou plusieurs fonctionnalités que l'utilisateur souhaite obtenir. En réponse à cette requête, le serveur source SS peut transmettre au terminal T, outre les ressources de l'application, une clé secrète PPH. Cette clé secrète PPH est identique à celle décrite précédemment. La requête d'initialisation Reqᵢₙᵢₜ et la clé secrète PPH transitent sur le canal de transmission (ou un autre canal) reliant le terminal T au serveur source SS.

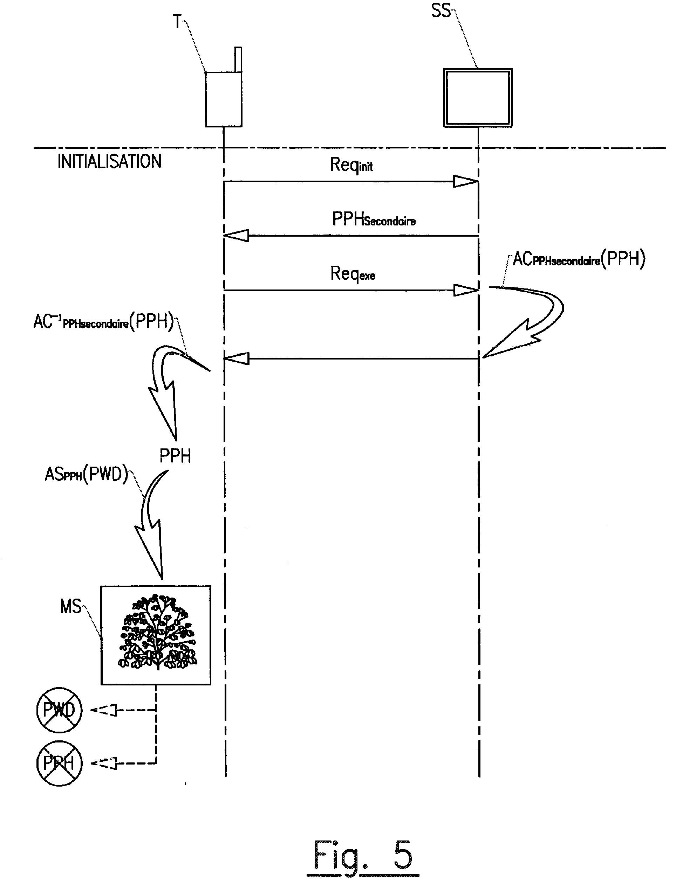

Dans une variante de réalisation dont les étapes sont illustrées sur la figure 5, on utilise une clé secrète secondaire PPH_{Secondaire} supplémentaire au cours de la phase d'initialisation. Après que le terminal T se soit connecté au serveur source SS, ledit serveur génère non seulement la clé secrète PPH définie précédemment, mais également une clé secondaire. Cette dernière est propre à chaque l'utilisateur et est en pratique associée à chaque identifiant des utilisateurs. La clé secrète PPH ainsi que la clé secrète secondaire PPH_{Secondaire} sont alors stockées dans une base de données du serveur source SS. Le serveur source SS transmet ensuite au terminal T la clé secrète secondaire
PPH_{Secondaire}. Cette dernière peut par exemple être rajoutée, à la volée, dans les ressources de l'application informatique téléchargée par l'utilisateur, dans une zone précise que connaît ladite application. La clé secondaire PPH_{Secondaire} pourra être astucieusement cachée dans le code compilé de l'application informatique. Lors de la première exécution, le terminal T transmet au serveur source SS une requête Reqₑₓₑ demandant audit serveur la clé secrète PPH. En réponse, le serveur source SS crypte la clé secrète PPH en utilisant un algorithme de cryptage AC_{PPHsecondaire} amorcé par la clé secondaire PPH_{Secondaire} puis transmet ladite clé secrète PPH cryptée au terminal T. On peut par exemple employer un algorithme de cryptage du type RSA ou DES, le but étant d'obtenir une chaîne de caractères binaires dans laquelle est dissimulée la clé secrète PPH. Le terminal T peut alors extraire la clé secrète PPH en exécutant un algorithme de cryptage inverse AC⁻¹_{PPHsecondaire} amorcé par la clé secondaire PPH_{Secondaire}. L'échange de la clé secrète PPH est ainsi mieux sécurisé.

De la même façon que décrit précédemment concernent le premier cas, dès que le terminal dispose de la clé secrète PPH, le terminal T cache le mot de passe PWD dans un fichier de données MS en appliquant un algorithme de cryptage AS_{PPH} avantageusement amorcé par la clé secrète PPH. Cet algorithme de cryptage AS_{PPH} est identique à celui décrit pour le premier cas.

Une fois que le mot de passe PWD est caché dans le fichier de données MS, le terminal T élimine ledit mot de passe afin de ne conserver que ledit fichier. Ce dernier peut ensuite être stocké dans une zone-mémoire du terminal T.

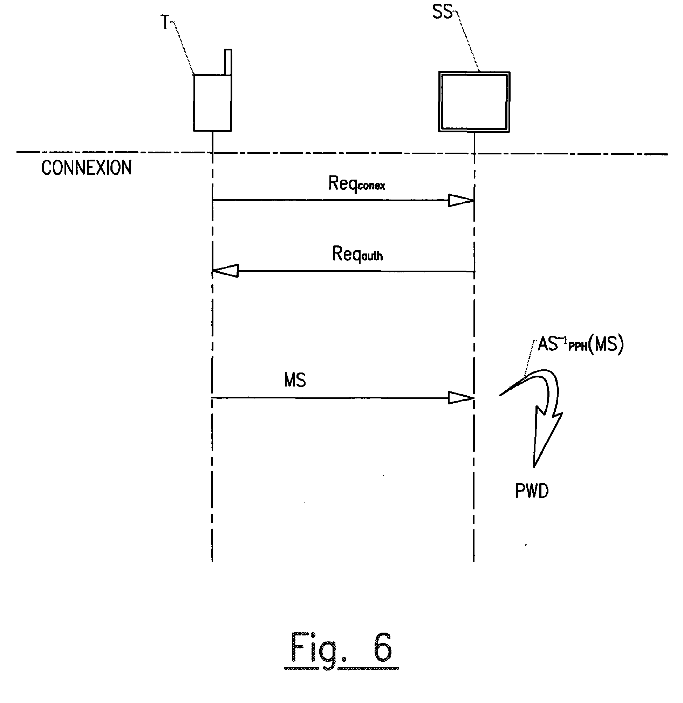

En se rapportant à la figure 6, lorsque l'utilisateur du terminal T souhaite ouvrir une session, une application informatique placée dans ledit terminal émet une requête de connexion Req_{conex} à destination du serveur source SS : c'est la phase de connexion. En retour, le serveur source SS envoie au terminal T une requête d'authentification Reqₐᵤₜₕ.

Lorsque le terminal T reçoit cette requête d'authentification Reqₐᵤₜₕ, il transmet au serveur source SS le fichier de données MS dans lequel est caché le mot de passe PWD. Ce dernier ne transite donc pas tel quel entre le terminal T et le serveur source SS. Après avoir reçu le fichier MS, le serveur source SS extrait le mot de passe PWD en exécutant un algorithme de cryptage inverse AS⁻¹_{PPH}, avantageusement amorcé par la clé secrète PPH associée à l'utilisateur du terminal T.

Le serveur source SS analyse le mot de passe PWD reçu et si ledit mot de passe est authentifié, autorise la connexion avec le terminal T pour activer la ou les fonctionnalités souhaitées par l'utilisateur. Dans le cas contraire, un message d'erreur peut être envoyé du serveur source SS vers le terminal T.

## Revendications

1. Procédé pour autoriser une connexion entre un terminal informatique (T) et un serveur source (SS), et dans lequel :
- le terminal (T) transmet un mot de passe (PWD) au serveur source (SS),
- le serveur source (SS) vérifie le mot de passe (PWD) pour autoriser la connexion avec le terminal (T),
**se caractérisant par le fait que** dans une phase d'initialisation :
- le terminal (T) se connecte à un serveur passerelle (SP) disposé entre ledit terminal et le serveur source (SS),
- le serveur passerelle (SP) transmet au terminal (T) une clé secrète (PPH),
- le terminal (T) cache le mot de passe (PWD) dans un fichier de données (MS) en appliquant un algorithme de cryptage (AS_{PPH}) amorcé par la clé secrète (PPH), puis élimine ladite clé secrète et ledit mot de passe afin de ne conserver que ledit fichier contenant ledit mot de passe,
et **par le fait que** dans une phase de connexion :
- le terminal (T) transmet au serveur passerelle (SP) le fichier de données (MS) contenant le mot de passe (PWD), ledit mot de passe PWD étant caché dans le fichier de données (MS) en appliquant un algorithme de stéganographie (AS_{PWD});
- le serveur passerelle (SP) extrait le mot de passe (PWD) du fichier (MS) en exécutant un algorithme de cryptage inverse (AS⁻¹_{PPH}) amorcé par la clé secrète (PPH), et transmet au serveur source (SS) ledit mot de passe sans le sauvegarder,
- le serveur source (SS) analyse le mot de passe (PWD) reçu et autorise la connexion avec le terminal (T) si ledit mot de passe est authentifié.

2. Procédé selon la revendication 1, dans lequel au cours de la phase d'initialisation :
- le serveur passerelle (SP) transmet préalablement au terminal (T) une clé secrète secondaire (PPH_{Secondaire}),
- le serveur passerelle (SP) crypte la clé secrète (PPH) en utilisant un algorithme de cryptage (AC_{PPHsecondaire}) amorcé par la clé secondaire (PPH_{Secondaire}), 5 puis transmet ladite clé secrète (PPH) cryptée au terminal (T),
- le terminal (T) extrait la clé secrète (PPH) en exécutant un algorithme de cryptage inverse (AC⁻¹_{PPHsecondaire}) amorcé par la clé secondaire (PPH_{Secondaire}).

3. Procédé pour autoriser une connexion entre un terminal informatique (T) et un serveur source (SS), et dans lequel :
- le terminal (T) transmet un mot de passe (PWD) au serveur source (SS),
- le serveur source (SS) vérifie le mot de passe (PWD) pour autoriser la connexion avec le terminal (T),
**se caractérisant par le fait que** dans une phase d'initialisation :
- le terminal (T) se connecte au serveur source (SS),
- le serveur source (SS) transmet au terminal (T) une clé secrète (PPH),
- le terminal (T) cache le mot de passe (PWD) dans un fichier de données (MS) en appliquant un algorithme de cryptage (AS_{PPH}) amorcé par la clé secrète (PPH), puis élimine ladite clé secrète et ledit mot de passe afin de ne conserver que ledit fichier contenant ledit mot de passe,
et **par le fait que** dans une phase de connexion :
- le terminal (T) transmet au serveur source (SS) le fichier de données (MS) contenant le mot de passe (PWD), ledit mot de passe PWD étant caché dans le fichier de données (MS) en appliquant un algorithme de stéganographie (AS_{PWD});
- le serveur source (SS) extrait le mot de passe (PWD) du fichier (MS) en exécutant un algorithme de cryptage inverse (AS⁻¹_{PPH}) amorcé par la clé secrète (PPH), analyse ledit mot de passe et autorise la connexion avec le terminal (T) si ledit mot de passe est authentifié.

4. Procédé selon la revendication 3, dans lequel au cours de la phase d'initialisation :
- le serveur source (SS) transmet préalablement au terminal (T) une clé secrète secondaire (PPH_{Secondaire}),
- le serveur source (SS) crypte la clé secrète 5 (PPH) en utilisant un algorithme de cryptage (AC_{PPHsecondaire}) amorcé par la clé secondaire (PPHSecondaire), puis transmet ladite clé secrète (PPH) cryptée au terminal (T),
- le terminal (T) extrait la clé secrète (PPH) en exécutant un algorithme de cryptage inverse (AC⁻¹_{PPHsecondaire}) amorcé par la clé secondaire (PPH_{Secondaire}).

5. Système pour autoriser une connexion entre un terminal informatique (T) et un serveur source (SS), et dans lequel :
- le terminal (T) comporte un moyen pour transmettre un mot de passe (PWD) au serveur source (SS),
- le serveur source (SS) comporte un moyen pour vérifier le mot de passe (PWD) pour autoriser la connexion avec le terminal (T),
**se caractérisant par le fait que** dans une phase d'initialisation :
- le terminal (T) comporte un moyen pour se connecter à un serveur passerelle (SP) disposé entre ledit terminal et le serveur source (SS),
- le serveur passerelle (SP) comporte un moyen pour transmettre au terminal (T) une clé secrète (PPH),
- le terminal (T) comporte un moyen pour cacher le mot de passe (PWD) dans un fichier de média (MS) en appliquant un algorithme de cryptage (AS_{PPH}) amorcé par la clé secrète (PPH), et un moyen pour éliminer ladite clé secrète et ledit mot de passe afin de ne conserver que ledit fichier contenant ledit mot de passe,
et **par le fait que** dans une phase de connexion :
- le terminal (T) comporte un moyen pour transmettre le fichier de média (MS) contenant le mot de passe (PWD) au serveur passerelle (SP),
- le serveur passerelle (SP) comporte un moyen pour extraire le mot de passe (PWD) du fichier média (MS) en exécutant un algorithme de cryptage inverse (AS⁻¹_{PPH}) amorcé par la clé secrète (PPH), et un moyen pour transmettre au serveur source (SS) ledit mot de passe sans le sauvegarder,
- le serveur source (SS) comporte un moyen pour analyser le mot de passe (PWD) reçu et autoriser la connexion avec le terminal (T) si ledit mot de passe est authentifié.

6. Système pour autoriser une connexion entre un terminal informatique (T) et un serveur source (SS), et dans lequel :
- le terminal (T) comporte un moyen pour transmettre un mot de passe (PWD) au serveur source (SS),
- le serveur source (SS) comporte un moyen pour vérifier le mot de passe PWD) pour autoriser la connexion avec le terminal (T),
**se caractérisant par le fait que** dans une phase d'initialisation :
- le terminal (T) comporte un moyen pour se connecter au serveur source (SS),
- le serveur source (SS) comporte un moyen pour transmettre au terminal (T) une clé secrète (PPH),
- le terminal (T) comporte un moyen pour cacher le mot de passe (PWD) dans un fichier média (MS) en appliquant un algorithme de cryptage (AS_{PPH}) amorcé par la clé secrète (PPH), et un moyen pour éliminer ladite clé secrète et ledit mot de passe afin de ne conserver que ledit fichier média contenant ledit mot de passe,
et **par le fait que** dans une phase de connexion :
- le terminal (T) comporte un moyen pour transmettre le fichier média (MS) contenant le mot de passe (PWD) au serveur source (SS),
- le serveur source (SS) comporte un moyen pour extraire le mot de passe (PWD) du fichier (MS) en exécutant un algorithme de cryptage inverse (AS⁻¹_{PPH}) amorcé par la clé secrète (PPH), un moyen pour analyser ledit mot de passe et autoriser la connexion avec le terminal (T) si ledit mot de passe est authentifié.

7. Système selon l'une des revendications 5 ou 6, dans lequel le terminal informatique (T) est un téléphone mobile.

8. Système selon l'une des revendications 5 à 7, dans lequel le serveur source (SS) est un serveur de communauté de messagerie instantanée.

## Patentansprüche

1. Verfahren zum Zulassen einer Verbindung zwischen einem Datenendgerät (T) und einem Quellen-Server (SS), wobei das Endgerät (T) ein Passwort (PWD) zu dem Quellen-Server (SS) sendet;
- wobei der Quellen-Server (SS) das Passwort (PWD) verifiziert, um die Verbindung mit dem Endgerät (T) zuzulassen,
**dadurch gekennzeichnet, dass** in einer Initialisierungsphase:
- das Endgerät (T) sich mit einem Brücken-Server (SP), der zwischen dem Endgerät und dem Quellen-Server (SS) angeordnet ist, verbindet,
- der Brücken-Server (SP) an das Endgerät (T) einen geheimen Schlüssel (PPH) sendet,
- das Endgerät (T) das Passwort (PWD) in einer Datendatei (MS) versteckt, indem es einen Verschlüsselungsalgorithmus (AS_{PPH}), der durch den geheimen Schlüssel (PPH) ausgelöst wird, anwendet, und dann den geheimen Schlüssel und das Passwort entfernt, um nur die Datei, die das Passwort enthält, beizubehalten,
und dass in einer Verbindungsphase:
- das Endgerät (T) an den Brücken-Server (SP) die Datendatei (MS), die das Passwort (PWD) enthält, sendet, wobei das Passwort PWD in der Datendatei (MS) verborgen ist, indem ein steganographischer Algorithmus (AS_{PWD}) angewendet wird;
- der Brücken-Server (SP) das Passwort (PWD) aus der Datei (MS) extrahiert, indem er einen inversen Verschlüsselungsalgorithmus (AS⁻¹_{PPH}), der durch den geheimen Schlüssel (PPH) ausgelöst wird, ausführt, und an den Quellen-Server (SS) das Passwort ohne Schutz sendet,
- der Quellen-Server (SS) das empfangene Passwort (PWD) analysiert und die Verbindung mit dem Endgerät (T) zulässt, falls das Passwort authentifiziert wird.

2. Verfahren nach Anspruch 1, wobei während der Initialisierungsphase:
- der Brücken-Server (SP) vorher an das Endgerät (T) einen sekundären geheimen Schlüssel (PPH_{Sekundär}) sendet,
- der Brücken-Server (SP) den geheimen Schlüssel (PPH) unter Verwendung eines Verschlüsselungsalgorithmus (AC_{PPHsekundär}), der durch den sekundären Schlüssel (PPH_{Sekundär}) ausgelöst wird, verschlüsselt 5 und dann den verschlüsselten geheimen Schlüssel (PPH) an das Endgerät (T) sendet,
- das Endgerät (T) den geheimen Schlüssel (PPH) unter Ausführung eines inversen Verschlüsselungsalgorithmus (AC⁻¹_{PPHsekundär}), der durch den sekundären Schlüssel (PPH_{sekundär}) ausgelöst wird, extrahiert.

3. Verfahren zum Zulassen einer Verbindung zwischen einem Datenendgerät (T) und einem Quellen-Server (SS), wobei:
- das Endgerät (T) ein Passwort (PWD) an den Quellen-Server (SS) sendet,
- der Quellen-Server (SS) das Passwort (PWD) verifiziert, um die Verbindung mit dem Endgerät (T) zuzulassen,
**dadurch gekennzeichnet, dass** in einer Initialisierungsphase:
- das Endgerät (T) sich mit dem Quellen-Server (SS) verbindet,
- der Quellen-Server (SS) an das Endgerät (T) einen geheimen Schlüssel (PPH) sendet,
- das Endgerät (T) das Passwort (PWD) in einer Datendatei (MS) verbirgt, indem es einen Verschlüsselungsalgorithmus (AS_{PPH}) anwendet, der durch den geheimen Schlüssel (PPH) ausgelöst wird, und dann den geheimen Schlüssel und das Passwort entfernt, um nur die Datei, die das Passwort enthält, beizubehalten, und dass in einer Verbindungsphase:
- das Endgerät (T) an den Quellen-Server (SS) die Datendatei (MS), die das Passwort (PWD) enthält, sendet, wobei das Passwort PWD in der Datendatei (MS) verborgen ist, indem ein steganographischer Algorithmus (AS_{PWD}) angewendet wird;
- der Quellen-Server (SS) das Passwort (PWD) aus der Datei (MS) unter Ausführung eines inversen Verschlüsselungsalgorithmus (AS⁻¹_{PPH}), der durch den geheimen Schlüssel (PPH) ausgelöst wird, extrahiert, das Passwort analysiert und die Verbindung mit dem Endgerät (T) zulässt, falls das Passwort authentifiziert wird.

4. Verfahren nach Anspruch 3, wobei während der Initialisierungsphase:
- der Quellen-Server (SS) im Voraus an das Endgerät (T) einen sekundären geheimen Schlüssel (PPH_{sekundär}) sendet,
- der Quellen-Server (SS) den geheimen Schlüssel 5 (PPH) unter Verwendung eines Verschlüsselungsalgorithmus (AC_{PPHsekundär}) der von dem sekundären Schlüssel (PPH_{sekundär}) ausgelöst wird, verschlüsselt und dann den verschlüsselten geheimen Schlüssel (PPH) an das Endgerät (T) sendet,
- das Endgerät (T) den geheimen Schlüssel (PPH) unter Ausführung eines inversen Verschlüsselungsalgorithmus (AC⁻¹_{PPHsekundär}), der durch den sekundären Schlüssel (PPH_{sekundär}) ausgelöst wird, extrahiert.

5. System zum Zulassen einer Verbindung zwischen einem Datenendgerät (T) und einen Quellen-Server (SS), wobei:
- das Endgerät (T) ein Mittel enthält, um ein Passwort (PWD) an den Quellen-Server (SS) zu senden,
- der Quellen-Server (SS) ein Mittel enthält, um das Passwort (PWD) zu verifizieren, um die Verbindung mit dem Endgerät (T) zuzulassen,
**dadurch gekennzeichnet, dass** in einer Initialisierungsphase:
- das Endgerät (T) ein Mittel enthält, um sich mit einem Brücken-Server (SP), der zwischen dem Endgerät und dem Quellen-Server (SS) angeordnet ist, zu verbinden,
- der Brücken-Server (SP) ein Mittel umfasst, um an das Endgerät (T) einen geheimen Schlüssel (PPH) zu senden,
- das Endgerät (T) ein Mittel enthält, um das Passwort (PWD) in einer Mediendatei (MS) zu verbergen, indem ein Verschlüsselungsalgorithmus (AS_{PPH}) angewendet wird, der durch den geheimen Schlüssel (PPH) ausgelöst wird, und ein Mittel enthält, um den geheimen Schlüssel und das Passwort zu entfernen, um nur die Datei, die das Passwort enthält, beizubehalten,
und dass in einer Verbindungsphase:
- das Endgerät (T) ein Mittel enthält, um die Mediendatei (MS), die das Passwort (PWD) enthält, an den Brücken-Server (SP) zu senden,
- der Brücken-Server (SP) ein Mittel enthält, um das Passwort (PWD) aus der Mediendatei (MS) unter Ausführung eines inversen Verschlüsselungsalgorithmus (AS⁻¹_{PPH}) , der durch den geheimen Schlüssel (PPH) ausgelöst wird, zu extrahieren, und ein Mittel enthält, um das Passwort ohne Schutz an den Quellen-Server (SS) zu senden,
- der Quellen-Server (SS) ein Mittel enthält, um das empfangene Passwort (PWD) zu analysieren und die Verbindung mit dem Endgerät (T) zuzulassen, falls das Passwort authentifiziert wird.

6. System zum Zulassen einer Verbindung zwischen einem Datenendgerät (T) und einem Quellen-Server (SS), wobei:
- das Endgerät (T) ein Mittel enthält, um ein Passwort (PWD) an den Quellen-Server (SS) zu senden,
- der Quellen-Server (SS) ein Mittel enthält, um das Passwort (PWD) zu verifizieren, um die Verbindung mit dem Endgerät (T) zuzulassen,
**dadurch gekennzeichnet, dass** in einer Initialisierungsphase:
- das Endgerät (T) ein Mittel enthält, um sich mit dem Quellen-Server (SS) zu verbinden,
- der Quellen-Server (SS) ein Mittel enthält, um an das Endgerät (T) einen geheimen Schlüssel (PPH) zu senden,
- das Endgerät (T) ein Mittel enthält, um das Passwort (PWD) in einer Mediendatei (MS) unter Anwendung eines Verschlüsselungsalgorithmus (AS_{PPH}), der durch den geheimen Schlüssel (PPH) ausgelöst wird, zu verbergen, und ein Mittel enthält, um den geheimen Schlüssel und das Passwort zu entfernen, um nur die Mediendatei, die das Passwort enthält, beizubehalten,
und dass in einer Verbindungsphase:
- das Endgerät (T) ein Mittel enthält, um die Mediendatei (MS) die das Passwort (PWD) enthält, an den Quellen-Server (SS) zu senden,
- der Quellen-Server (SS) ein Mittel enthält, um das Passwort (PWD) aus der Datei (MS) unter Ausführung eines inversen Verschlüsselungsalgorithmus (AS⁻¹_{PPH}), der durch den geheimen Schlüssel (PPH) ausgelöst wird, zu extrahieren, und ein Mittel enthält, um das Passwort zu analysieren und die Verbindung mit dem Endgerät (T) zuzulassen, falls das Passwort authentifiziert wird.

7. System nach einem der Ansprüche 5 oder 6, wobei das Datenendgerät (T) ein Mobiltelephon ist.

8. System nach einem der Ansprüche 5 bis 7, wobei der Quellen-Server (SS) ein gemeinsamer Sofortnachrichten-Server ist.

## Claims

1. Method for authorizing a connection between a computer terminal (T) and a source server (SS), and in which:
- the terminal (T) transmits a password (PWD) to the source server (SS),
- the source server (SS) verifies the password (PWD) to authorize the connection with the terminal (T),
being **characterized by** the fact that in an initialization phase:
- the terminal (T) connects to a gateway server (SP) arranged between said terminal and the source server (SS),
- the gateway server (SP) transmits a secret key (PPH) to the terminal (T),
- the terminal (T) hides the password (PWD) in a data file (MS) by applying an encryption algorithm (AS_{PPH}) booted by the secret key (PPH), then eliminates said secret key and said password in order to conserve only said file containing said password,
and by the fact that in a connection phase:
- the terminal (T) transmits the data file (MS) containing the password (PWD) to the gateway server (SP), said password PWD being hidden in the data file (MS) by applying a steganographic algorithm (AS_{PWD});
- the gateway server (SP) extracts the password (PWD) from the file (MS) by executing a reverse encryption algorithm (AS⁻¹_{PPH}) booted by the secret key (PPH), and transmits said password to the source server (SS) without saving it,
- the source server (SS) analyses the received password (PWD) and authorizes the connection with the terminal (T) if said password is authenticated.

2. Method according to Claim 1, in which during the initialization phase:
- the gateway server (SP) transmits first a secondary secret key (PPH_{Secondary}) to the terminal (T),
- the gateway server (SP) encrypts the secret key (PPH) using an encryption algorithm (AC_{PPHsecondary}) booted by the secondary key (PPH_{Secondary}), 5 then transmits said encrypted secret key (PPH) to the terminal (T),
- the terminal (T) extracts the secret key (PPH) by executing a reverse encryption algorithm (AC⁻¹ _{PPHsecondary}) booted by the secondary key (PPH_{Secondary}).

3. Method for authorizing a connection between a computer terminal (T) and a source server (SS), and in which:
- the terminal (T) transmits a password (PWD) to the source server (SS),
- the source server (SS) verifies the password (PWD) to authorize the connection with the terminal (T),
being **characterized by** the fact that in an initialization phase:
- the terminal (T) connects to the source server (SS),
- the source server (SS) transmits a secret key (PPH) to the terminal (T),
- the terminal (T) hides the password (PWD) in a data file (MS) by applying an encryption algorithm (AS_{PPH}) booted by the secret key (PPH), then eliminates said secret key and said password in order to conserve only said file containing said password,
and by the fact that in a connection phase:
- the terminal (T) transmits the data file (MS) containing the password (PWD) to the source server (SS), said password PWD being hidden in the data file (MS) by applying a steganographic algorithm (AS_{PWD});
- the source server (SS) extracts the password (PWD) from the file (MS) by executing a reverse encryption algorithm (AS⁻¹_{PPH}) booted by the secret key (PPH), analyses said password and authorizes the connection with the terminal (T) if said password is authenticated.

4. Method according to Claim 3, in which during the initialization phase:
- the source server (SS) transmits first a secondary secret key (PPH_{Secondary}) to the terminal (T),
- the source server (SS) encrypts the secret key 5 (PPH) by using an encryption algorithm (AC_{PPHsecondary}) booted by the secondary key (PPHSecondary), then transmits said encrypted secret key (PPH) to the terminal (T),
- the terminal (T) extracts the secret key (PPH) by executing a reverse encryption algorithm (AC⁻¹ _{PPHsecondary}) booted by the secondary key (PPH_{Secondary}).

5. System for authorizing a connection between a computer terminal (T) and a source server (SS), and in which:
- the terminal (T) includes a means for transmitting a password (PWD) to the source server (SS),
- the source server (SS) includes a means for verifying the password (PWD) to authorize the connection with the terminal (T),
being **characterized by** the fact that in an initialization phase:
- the terminal (T) includes a means for connecting to a gateway server (SP) arranged between said terminal and the source server (SS),
- the gateway server (SP) includes a means for transmitting a secret key (PPH) to the terminal (T),
- the terminal (T) includes a means for hiding the password (PWD) in a media file (MS) by applying an encryption algorithm (AS_{PPH}) booted by the secret key (PPH), and a means for eliminating said secret key and said password in order to conserve only said file containing said password,
and by the fact that in a connection phase:
- the terminal (T) includes a means for transmitting the media file (MS) containing the password (PWD) to the gateway server (SP),
- the gateway server (SP) includes a means for extracting the password (PWD) from the media file (MS) by executing a reverse encryption algorithm (AS⁻¹_{PPH}) booted by the secret key (PPH), and a means for transmitting said password to the source server (SS) without saving it,
- the source server (SS) includes a means for analysing the received password (PWD) and authorizing the connection with the terminal (T) if said password is authenticated.

6. System for authorizing a connection between a computer terminal (T) and a source server (SS), and in which:
- the terminal (T) includes a means for transmitting a password (PWD) to the source server (SS),
- the source server (SS) includes a means for verifying the password (PWD) to authorize the connection with the terminal (T),
being **characterized by** the fact that in an initialization phase:
- the terminal (T) includes a means for connecting to the source server (SS),
- the source server (SS) includes a means for transmitting a secret key (PPH) to the terminal (T),
- the terminal (T) includes a means for hiding the password (PWD) in a media file (MS) by applying the encryption algorithm (AS_{PPH}) booted by the secret key (PPH), and a means for eliminating said secret key and said password in order to conserve only said media file containing said password,
and by the fact that in a connection phase:
- the terminal (T) includes a means for transmitting the media file (MS) containing the password (PWD) to the source server (SS),
- the source server (SS) includes a means for extracting the password (PWD) from the file (MS) by executing a reverse encryption algorithm (AS⁻¹_{PPH}) booted by the secret key (PPH), a means for analysing said password and authorizing the connection with the terminal (T) if said password is authenticated.

7. System according to one of Claims 5 or 6, in which the computer terminal (T) is a mobile phone.

8. System according to one of Claims 5 to 7, in which the source server (SS) is an instant messaging community server.
